# EUROPEAN PATENT SPECIFICATION

(11) **EP 2 381 339 B1**
(45) Date of publication and mention of the grant of the patent: **27.11.2013**
(21) Application number: 10176986.7
(22) Date of filing: 20.10.2010
(51) Int. Cl.: G06F 3/01, G03H 1/00, G06F 3/044, G06F 3/046, G06F 3/042, G06F 3/048, G09G 5/00

(54) **User interface using hologram and method thereof**
Benutzerschnittstelle mit Hologramm und Verfahren dafür
Interface utilisateur utilisant un hologramme et son procédé

(30) Priority: 29.01.2010 KR 20100008733
(43) Date of publication of application: 26.10.2011
(73) Proprietor: Pantech Co., Ltd., Seoul 121-792 (KR)
(72) Inventor: Lee, Han Gweon, 152-842, Seoul (KR)
(74) Representative: Herzog, Markus

(56) References cited:
- EP-A1- 1 879 129
- US-A- 6 031 519
- US-A1- 2009 076 766
- US-B1- 6 507 353
- KORIDA K ET AL: "An interactive 3D interface for a virtual ceramic art work environment", VIRTUAL SYSTEMS AND MULTIMEDIA, 1997. VSMM '97. PROCEEDINGS., INTERNAT IONAL CONFERENCE ON GENEVA, SWITZERLAND 10-12 SEPT. 1997, LOS ALAMITOS, CA, USA,IEEE COMPUT. SOC, US, 10 September 1997 (1997-09-10), pages 227-234, XP010245649, DOI: 10.1109/VSMM.1997.622351 ISBN: 978-0-8186-8150-9

## Description

### CROSS-REFERENCE TO RELATED APPLICATION

This application claims priority from and the benefit of Korean Patent Application No. 10-2010-0008733, filed on January 29, 2010, which is hereby incorporated by reference for all purposes as if fully set forth herein.

### BACKGROUND

1. Field

Disclosed herein is a user interface using a hologram and a method thereof.

2. Discussion of the Background

Currently, a touch-type user interface that recognizes an input through an external contact is provided in a terminal, such as a lap-top, desk-top, or mobile terminal. In such a terminal, various functions are performed by recognizing a user's contact input through a touch-type user interface.

In general, a touch-type user interface may include a touch pad, touch screen, or the like, which provides a two-dimensional touch-type user interface through a screen. At this time, various virtual objects, such as icons, for user input are displayed on the screen.

If a user's contact occurs on a screen, such a touch-type user interface recognizes that a virtual object displayed at the position at which the user's contact occurs on the screen is selected by a user, and recognizes that an instruction for executing a specified function corresponding to the selected virtual object is inputted by the user. Accordingly, the user interface allows a terminal to execute the specified function corresponding to the virtual object selected by the user's contact among virtual objects displayed on the screen.

Meanwhile, a user interface that provides a three-dimensional touch-type user interface using a hologram has recently been developed as an extension of the two-dimensional touch-type user interface.

In such a user interface using a hologram, a hologram display area is displayed in an arbitrary area in a space, and various virtual objects for user input are displayed in the hologram display area. The user interface recognizes that a virtual object among the displayed virtual objects is selected by a user, and recognizes that an instruction for executing a specified function corresponding to the selected virtual object is inputted by the user. Accordingly, the user interface allows a terminal to execute the specified function corresponding to the virtual object selected by the user's contact.

However, if a contact with a displayed virtual object occurs, the user interface using the hologram recognizes that the virtual object is selected by a user, and recognizes that an instruction for executing a specified function corresponding to the selected virtual object is inputted by the user. Hence, when a real object such as a part of a user's body simply passes through a hologram display area displayed in a space, i.e., when the real object passes through the hologram display while coming in contact with a specified virtual object, the user interface recognizes that the specified virtual object is selected by the user, and recognizes that an instruction for executing a specified function corresponding to the selected virtual object is inputted by the user. Therefore, a malfunction of a terminal may be caused.

US 6031519 A discloses a system applying a holographic display.

### SUMMARY

Disclosed herein is a user interface using a hologram, which displays virtual objects for user input in a space using the hologram, and recognizes the user's various inputs through the displayed virtual objects.

Also, disclosed herein is a user interface using a hologram, which can provide feedback to a user through a visual or a tactile effect.

Additional features of the invention will be set forth in the description which follows, and in part will be apparent from the description, or may be learned by practice of the invention.

Aspects of the invention are disclosed in independent claims 1 and 13.

An exemplary embodiment provides a user interface, including a memory unit to store information on a shape, a function, a position, and a movement pattern for a virtual object; a hologram output unit to project a hologram display area and to display the virtual object in the projected hologram display area; a communication unit to receive a wireless signal transmitted from a real object that transmits the wireless signal, the wireless signal containing information; a real object sensing unit to receive the wireless signal from the communication unit, to extract the information contained in the wireless signal, and to generate information on a position and a movement pattern of the real object in the hologram display area according to the wireless signal; a contact recognizing unit to determine the positions and the movement patterns of the respective virtual object and the real object in the hologram display area according to the information on the position and the movement pattern of the real obj ect generated by the real object sensing unit, and the information stored in the memory unit to recognize a contact between the virtual object and the real object; and a control unit to determine a function of the real object that comes in contact with the virtual object according to the information of the real object extracted by the real object sensing unit.

An exemplary embodiment provides a user interface, including a memory unit to store information on a virtual object; a hologram output unit to project the virtual object in a hologram display area; a real object sensing unit to sense a real object in the hologram display area; a contact recognizing unit to determine a contact between the real object and the virtual object according to the information on the virtual object and information on the sensed real object; and a control unit to determine whether the recognized contact corresponds to an input for selecting the virtual object.

An exemplary embodiment provides a method for a user interface, the method including displaying a virtual object in a hologram display area; determining if a contact between a real object and the virtual object occurs; determining if the contact between the real object and the virtual object corresponds to an input for selecting the virtual object; moving the selected virtual object according to a movement of the real object; and executing a function corresponding to the selected virtual object according to the movement of the selected virtual obj ect.

An exemplary embodiment provides a method for a user interface, the method including displaying a virtual object in a hologram display area; determining if a contact between a real object and the virtual object occurs; determining a function of the real object if the contact occurs; and executing the function of the real object with respect to the virtual object.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a user interface using a hologram according to an exemplary embodiment.

FIG. 2 is a flowchart illustrating a method for recognizing an input in a user interface using the hologram according to an exemplary embodiment.

FIG. 3, FIG. 4, FIG. 5, FIG. 6, and FIG. 7 illustrate methods for recognizing an input in the user interface using the hologram according to exemplary embodiments.

FIG. 8 is a block diagram illustrating a configuration of a user interface using a hologram according to an exemplary embodiment.

FIG. 9 is a flowchart illustrating a method for recognizing an input in the user interface using the hologram according to an exemplary embodiment.

FIG. 10 illustrates a method for recognizing an input in the user interface using the hologram according to an exemplary embodiment.

### DETAILED DESCRIPTION OF THE ILLUSTRATED EMBODIMENTS

The invention is described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc. does not denote a limitation of quantity, but rather denotes the presence of at least one of the referenced item. The use of the terms "first", "second", and the like does not imply any particular order, but they are included to identify individual elements. Moreover, the use of the terms "first", "second", etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size, and regions, and the like, of the drawing may be exaggerated for clarity.

Hereinafter, a user interface using a hologram and a method for recognizing an input of the user interface according to exemplary embodiments will be described in detail with reference to the accompanying drawings.

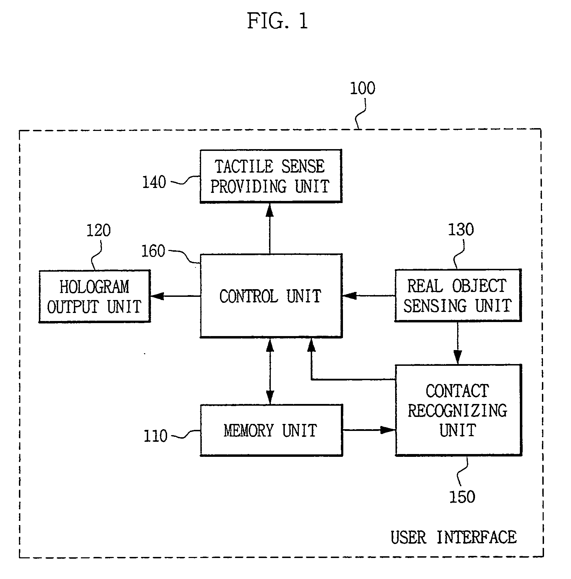

FIG. 1 is a block diagram illustrating a user interface using a hologram according to an exemplary embodiment. As shown in FIG. 1, a touch-type user interface 100 using a hologram according to an exemplary embodiment includes a memory unit 110, a hologram output unit 120, a real object sensing unit 130, a tactile sense providing unit 140, a contact recognizing unit 150, and a control unit 160. Although described herein as a touch-type user interface 100, the user interface 100 need not be of the touch-type in all aspects.

The memory unit 110 stores information on a shape, a function, an initial position, and an initial movement pattern for each virtual object. The information on the initial position includes a three-dimensional position coordinate and the like. The information on the initial movement pattern includes a three-dimensional position coordinate, a vector value (i.e., a movement distance, a direction, and a velocity), and the like.

The hologram output unit 120 projects a hologram display area in an arbitrary area in a space under the control of the control unit 160, and displays virtual objects in the projected hologram display area. The space in which the hologram display area is projected may be adjacent to and/or outside of the touch-type user interface 100.

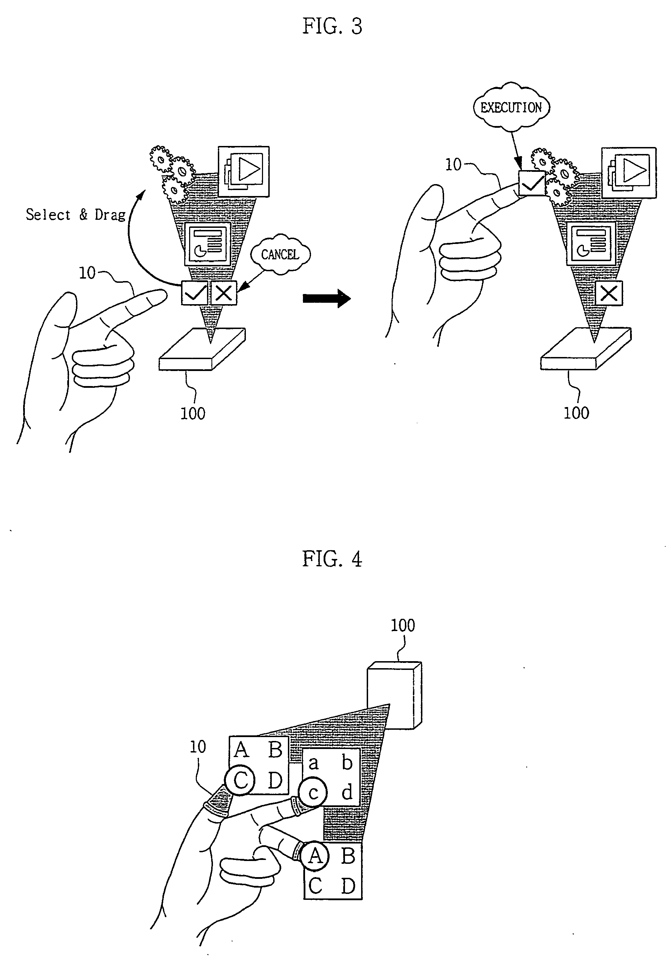

The real object sensing unit 130 senses a real object that exists in the hologram display area, and generates information on a position and a movement pattern of the real object 10 (shown in FIG. 3). The real object sensing unit 130 obtains the three-dimensional position coordinate of the real object 10 that exists in the hologram display area, and generates information on the position of the real object 10 using the obtained three-dimensional position coordinate. Then, the real object sensing unit 130 calculates a vector value based on a change in the position of the real object 10 using a change in the three-dimensional position coordinate of the real object 10, and generates information on the movement pattern of the real object 10 using the calculated vector value. The real object 10 may include a user's finger, a small-size device having a wireless signal transmitting function, or the like. The small-size device may be formed in a shape attachable to a user's finger.

The real object sensing unit 130 may obtain the three-dimensional coordinate of the real object 10 that exists in the hologram display area using one of a capacitive touch screen method, an infrared (IR) touch screen method, an electromagnetic resonance (EMR) digitizer method, an image recognizing method, and the like.

The real object sensing unit 130 receives a wireless signal transmitted from the real object 10, and determines a distance to the real object 10 using the reception intensity of the received wireless signal. Then, the real object sensing unit 130 determines the three-dimensional position coordinate of the real object 10 using the determined distance from the real object 10 and the reception direction of the wireless signal. The real object sensing unit 130 may have a communication unit (not shown) to perform wireless communications with real object 10.

The tactile sense providing unit 140 provides an acoustic radiation pressure to the hologram display area by radiating an acoustic wave under the control of the control unit 160. As a result, the real object 10 that exists in the hologram display area is influenced by the acoustic radiation pressure provided from the tactile sense providing unit 140.

The contact recognizing unit 150 identifies, in real time, the positions and movement patterns of the respective real object 10 and virtual object in the hologram display area projected by the hologram output unit 120 using the information on the position and movement pattern of the real object 10, generated by the real object sensing unit 130, and the information stored in the memory unit 110. Thus, the contact recognizing unit 150 determines whether a contact between the virtual object and the real object 10 occurs in the hologram display area. If the contact recognizing unit 150 determines that the contact between the virtual object and the real object 10 occurs in the hologram display area, the contact recognizing unit 150 detects the contact part of the virtual object that comes in contact with the real object 10. If a part of the three-dimensional position coordinates of the respective virtual object and real object 10 that are overlapped with each other occurs in the hologram display area by identifying, in real time, the positions and movement patterns of the respective real object 10 and virtual object in the hologram display area, the contact recognizing unit 150 recognizes that the contact between the virtual object and the real object 10 occurs. The contact recognizing unit 150 may also recognize three-dimensional position coordinates corresponding to the part of the three-dimensional position coordinates of the respective virtual object and real object 10 that are overlapped with each other occurs in the hologram display area as the three-dimensional position coordinates of the contact part of the virtual object that comes in contact with the real object 10.

Meanwhile, the control unit 160 controls the hologram output unit 120 to project a hologram display area, and controls virtual objects to be displayed in the projected hologram display area. The control unit 160 controls virtual objects for providing various functions to be respectively displayed at their initial positions or to be respectively moved in their initial patterns using the information stored in the memory unit 110.

If the contact recognizing unit 150 recognizes that a contact between the virtual object and the real object 10 occurs in the hologram display area, the control unit 160 determines whether the contact between the virtual obj ect and the real obj ect 10 is an input for virtual obj ect selection. As a result, if the control unit 160 determines that the contact between the virtual object and the real object 10 is an input for selecting the virtual object, the control unit 160 detects a function of the virtual object that comes in contact with the real object 10 by searching for the information stored in the memory unit 110, and recognizes that an instruction for executing the detected function is inputted.

If the contact recognizing unit 150 recognizes that a contact between the virtual object and the real object 10 occurs in the hologram display area, the control unit 160 determines that the contact between the virtual object and the real object 10 is the selection of the virtual object. As a result, if the control unit 160 determines that the contact between the virtual object and the real object 10 is an input for selecting the virtual object or an input for canceling the virtual object, the control unit 160 controls the hologram output unit 120, thereby changing a color or a shape of the virtual object that comes in contact with the real object 10. Accordingly, a user can visually identify whether the virtual object is selected. The control unit 160 controls the tactile sense providing unit 140 to provide an acoustic radiation pressure to the hologram display area. As a result, when the real object 10 corresponds to a part of a user's body, the user can identify via tactile sense whether the virtual object is selected.

When the real object 10 comes in contact with the virtual object for longer than a reference time or when the real object 10 simultaneously comes in contact with a plurality of markers that exist at parts of the virtual object, the control unit 160 may determine that the contact between the virtual object and the real object 10 is an input for selecting the virtual object. The reference time may be predetermined or selectable.

If it is determined that the contact between the virtual object and the real object 10 is an input for selecting the virtual object, the control unit 160 traces, in real time, the movement of the real object 10 in the hologram display area using the information on the movement pattern of the real object 10 generated by the real object sensing unit 130. The control unit 160 determines whether the real object 10 that contacts the virtual object is out of the hologram display area, i.e., a range sensed by the real object sensing unit 130. If control unit 160 determines that the real object 10 is out of or exits the range or that the contact of the real object 10 is released from one of the plurality of markers with which the real object 10 simultaneously comes in contact, the control unit 160 determines that the input for selecting the virtual object is cancelled, and controls the hologram output unit 120 to change the color or the shape of the virtual object that comes in contact with the real object 10. The control unit 160 also controls the tactile sense providing unit 140 to provide an acoustic radiation pressure to the hologram display area.

If it is determined that the contact between the virtual object and the real object 10 is an input for selecting the virtual object, the control unit 160 traces, in real time, the movement of the real object 10 in the hologram display area using the information on the movement pattern of the real object 10 generated by the real object sensing unit 130. The control unit 160 also controls the hologram output unit 120 to allow the virtual object that comes in contact with the real object 10 to be moved corresponding to the movement of the real object 10. Based on the movement of the virtual object, the control unit 160 recognizes that an instruction for executing a specified function is inputted by a user or that an instruction for canceling the execution of the specified function is inputted by the user.

For example, the control unit 160 controls the hologram output unit 120 to rotate the virtual object based on the rotational movement of the real object 10 that comes in contact with the virtual object or to drag the virtual object to the movement position of the real object 10 based on the movement of the real object 10 that comes in contact with the virtual object. Based on the rotating or dragging position of the virtual object, the control unit 160 recognizes that an instruction for executing a specified function is inputted by a user or that an instruction for canceling the execution of the specified function is inputted by the user. For example, if the virtual object is rotated at an arbitrary angle in an arbitrary direction; if the virtual object is dragged to the position at which an arbitrary virtual object, such as an icon, for providing an executing or canceling function displayed in the hologram display area; or if an arbitrary virtual object such as an icon for providing an executing or canceling function is dragged to the position at which the virtual object to be executed or cancelled is displayed in the hologram display area, the control unit 160 may recognize that an instruction for executing a specified function is inputted by a user or that an instruction for canceling the specified function is inputted by the user.

If the movement pattern of the real object 10 is matched to a specified movement pattern using the information on the movement pattern of the real object 10 generated by the real object sensing unit 120, the control unit 160 may recognize that an instruction for executing a specified function is inputted by a user or that an instruction for canceling the specified function is inputted by the user.

If the control unit 160 recognizes that an instruction for executing a specified function is inputted by a user or that an instruction for canceling the specified function is inputted by the user, the control unit 160 controls the hologram output unit 120 to change the color or the shape of the hologram display area or virtual object displayed in the hologram display area. The control unit 160 may control the tactile sense providing unit 140 to provide an acoustic radiation pressure to the hologram display area.

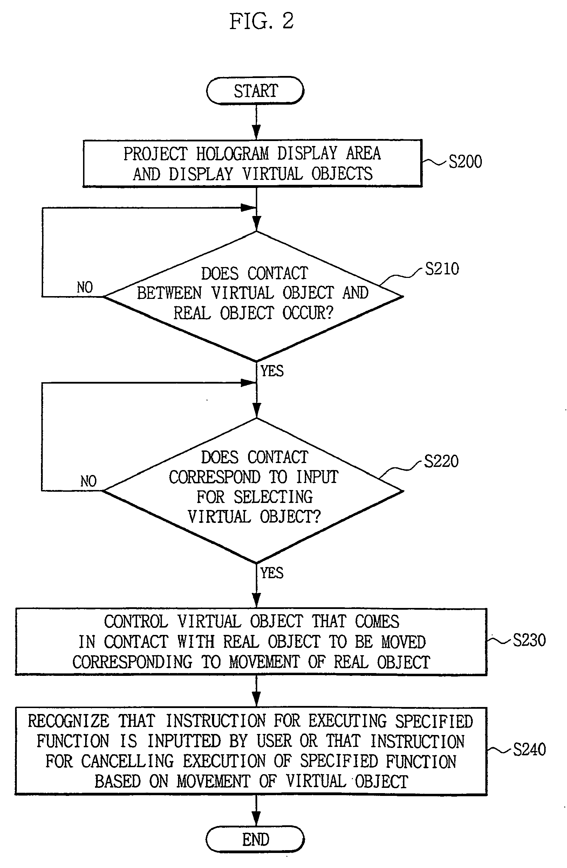

Hereinafter, a method for recognizing an input in the user interface using the hologram according to an exemplary embodiment will be described with reference to FIG. 2. FIG. 2 is a flowchart illustrating a method for recognizing an input in the user interface using the hologram according to an exemplary embodiment.

First, the user interface 100 using the hologram projects a hologram display area in a space, and displays virtual objects in the projected hologram display area (S200).

If a contact between a real object 10 and one of the virtual objects displayed in operation S200 occurs (S210), the control unit 160 determines whether the contact between the virtual object and the real object 10 corresponds to an input for selecting the virtual object (S220).

When it is determined in operation S220 that the contact between the virtual object and the real object 10 corresponds to the input for selecting the virtual object, the control unit 160 controls the hologram output unit 120 to change a color or a shape of the virtual object that comes in contact with the real object 10. Then, the control unit 160 controls the tactile sense providing unit 140 to provide an acoustic radiation pressure to the hologram display area.

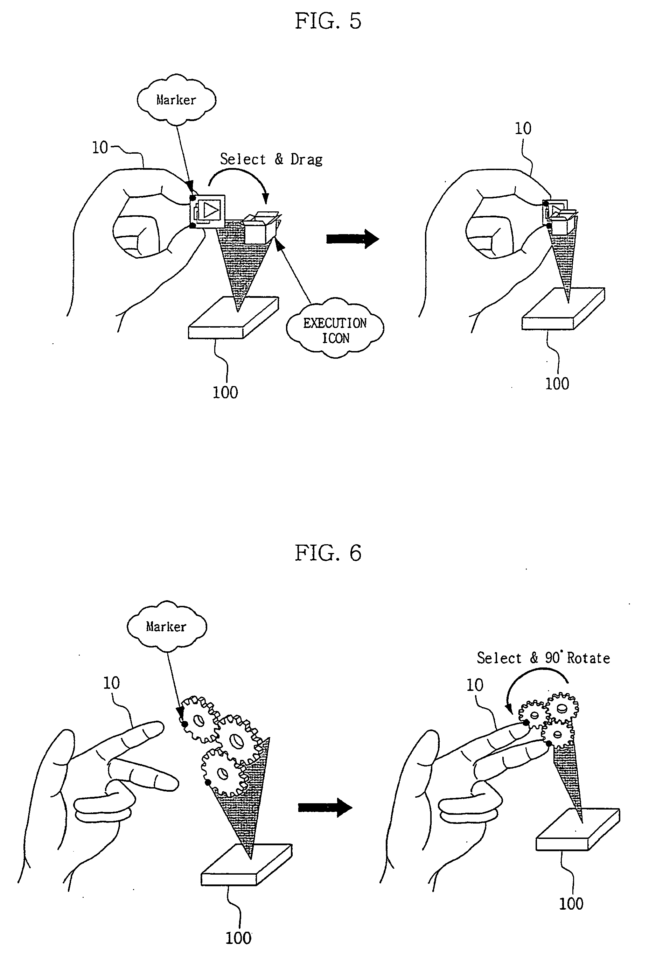

In operation S220, if the real object 10 comes in contact with the virtual object for longer than a reference time or if the real object 10 simultaneously comes in contact with a plurality of markers that exist at parts of the virtual object, the control unit 160 determines that the contact between the virtual object and the real object 10 corresponds to the input for selecting the virtual object. For example, if a user's finger, i.e., a real object 10, comes in contact with an icon having an executing function, i.e., a virtual object, for longer than a reference time as illustrated in FIG. 3; if a user's fingers, i.e., real objects 10, respectively, come in contact with a plurality of characters, i.e., virtual objects, for longer than the reference time as illustrated in FIG. 4; or if a user's fingers, i.e., real objects 10, come in contact with two markers that exist at parts of an icon, i.e., a virtual object, as illustrated in FIG. 5 and FIG. 6, the control unit 160 determines that the contact between the virtual object and the real object 10 is an input for selecting the virtual object.

If it is determined in operation S220 that the contact between the virtual object and the real object 10 is the input for selecting the virtual object, the control unit 160 traces, in real time, the movement of the real object 10 in the hologram display area, and controls the hologram output unit 120 to allow the virtual object that comes in contact with the real object 10 to be moved corresponding to the movement of the real object 10 (S230). Based on the movement of the virtual object, the control unit 160 recognizes that an instruction for executing a specified function is inputted by a user or that an instruction for canceling the execution of the specified function is inputted by the user (S240).

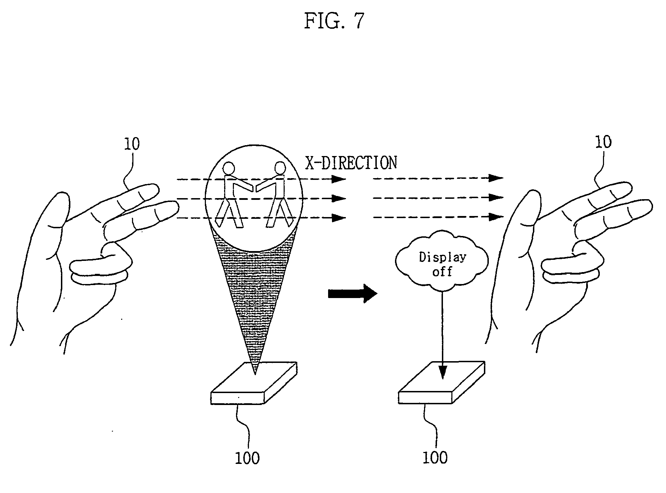

At the operation S240, if the icon, i.e., the virtual object, is rotated at an arbitrary angle in an arbitrary direction at the operation S230 as illustrated in FIG. 6; if the virtual object is dragged to the position at which an arbitrary virtual object, such as an icon, for providing an executing or canceling function displayed in the hologram display area as illustrated in FIG. 5; if an arbitrary virtual object, such as an icon, for providing an executing or canceling function is dragged to the position at which the virtual object to be executed or cancelled is displayed in the hologram display area as illustrated in FIG. 3; or if the movement pattern of the real object 10 is matched to an arbitrary movement pattern, i.e., any one of three-dimensional coordinate axes as illustrated in FIG. 7; the control unit 160 may recognize that an instruction for executing an arbitrary function, such as display-off, is inputted by a user or that an instruction for canceling the execution of a specified function is inputted by the user.

If it is recognized in operation S240 that the instruction for executing the specified function is inputted by the user or that the instruction for canceling the execution of the specified function is inputted by the user, the control unit 160 may control the hologram output unit 120 to change a color or a shape of the hologram display area or the virtual object displayed in the hologram display area. Then, the control unit 160 may control the tactile sense providing unit 140 to provide an acoustic radiation pressure to the hologram display area.

When it is determined at the operation S220 that the contact between the virtual object and the real object 10 is the input for selecting the virtual object, the control unit 160 traces the movement of the real object 10 in the hologram display area, and determines whether the real object 10 that comes in contact with the virtual object is out of or exits the hologram display area, i.e., a range for tracing the movement of the real object 10. If it is determined that the real object 10 is out of or exits the range or that the contact of the real object 10 is released from one of the plurality of markers with which the real object 10 simultaneously comes in contact, the control unit 160 determines that the input for selecting the virtual object is cancelled, and controls the hologram output unit 120 to change the color or the shape of the virtual object displayed in the hologram display area. Then, the control unit 160 may control the tactile sense providing unit 140 to provide an acoustic radiation pressure to the hologram display area.

FIG. 3 illustrates a method for recognizing an input in the user interface using the hologram according to an exemplary embodiment. As shown in FIG. 3, a user may select a virtual object 12 associated with executing a function with a real object 10, for example, a finger, and drag the virtual object to another virtual object 14, which represents a function to be executed. In such case the control unit 160 may execute the function associated with the virtual object 14.

FIG. 4 illustrates a method for recognizing an input in the user interface using the hologram according to an exemplary embodiment. As shown in FIG. 4, a user may select a plurality of virtual objects C, c, and A with a plurality of real objects 10, for example, small-size devices attachable to a user's fingers, in response to which the control unit 160 may execute a function.

FIG. 5 illustrates a method for recognizing an input in the user interface using the hologram according to an exemplary embodiment. As shown in FIG. 5, a user may contact a plurality of markers of a virtual object 16 with a plurality of real objects 10, for example, fingers, to select the virtual object 16 and may drag the virtual object 16 to another virtual object, for example, a virtual object 18 representing an execution function. In such case, the control unit 160 may execute a function associated with the virtual object 16.

FIG. 6 illustrates a method for recognizing an input in the user interface using the hologram according to an exemplary embodiment. As shown in FIG. 6, a user may contact a plurality of markers of a virtual object 20 with a plurality of real objects 10, for example, fingers, to select the virtual object 20 and manipulate the same. For example, the user may rotate the virtual object 20.

FIG. 7 illustrates a method for recognizing an input in the user interface using the hologram according to an exemplary embodiment. As shown in FIG. 7, a user may perform a swipe through a displayed or projected virtual object 22 with one or a plurality of real objects 10, for example, fingers, in response to which the control unit 160 may perform a function. For example, in FIG. 7, the control unit 160 may perform a display-off function in response to the swipe.

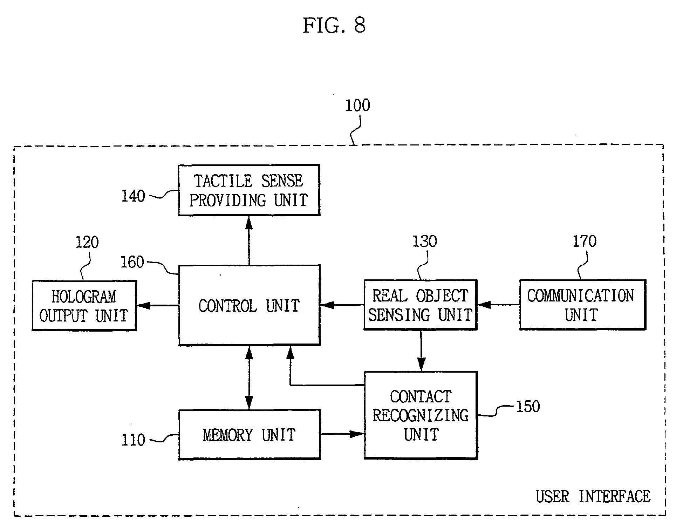

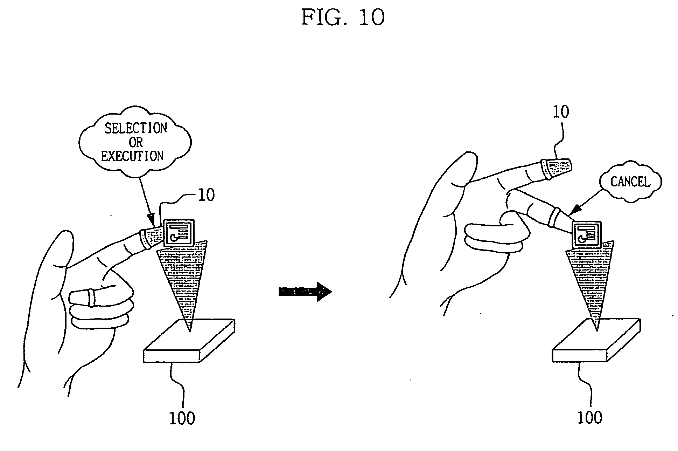

FIG. 8 is a block diagram illustrating a configuration of a user interface using a hologram according to an exemplary embodiment. FIG. 10 illustrates a method for recognizing an input in the user interface using the hologram according to an exemplary embodiment. As shown in FIG. 8, a touch-type user interface 200 using the hologram includes a memory unit 110, a hologram output unit 120, a real object sensing unit 130, a tactile sense providing unit 140, a contact recognizing unit 150, a control unit 160, and a communication unit 170. The touch-type user interface 200 is described hereinafter with respect to FIG. 8 and FIG. 10. Although described herein as a touch-type user interface 200, the user interface 200 need not be of the touch-type in all aspects.

The memory unit 110 stores information on a shape, a function, an initial position and an initial movement pattern for each virtual object. The information on the initial position includes a three-dimensional position coordinate and the like. The information on the initial movement pattern includes a three-dimensional position coordinate, a vector value (i.e., a movement distance, a direction and a velocity), and the like.

The hologram output unit 120 projects a hologram display area in an arbitrary area in a space under the control of the control unit 160, and displays virtual objects in the projected hologram display area.

If a wireless signal is received in the communication unit 170 from a real object 10a and/or 10b that exists in the hologram display area, the real object sensing unit 130 extracts functional information of the real object 10a and/or 10b contained in the received wireless signal and generates information on the position and movement pattern of the real object 10a and/or 10b in the hologram display area using the received wireless signal. Then, the real object sensing unit 130 provides the generated information to the control unit 160.

The real objects 10a and 10b may include different functions. For example, the real object 10a may include or represent a function of inputting a selection, a function of inputting an execution instruction, or the like, and the real object 10b may include or represent a function of inputting the cancellation of a selection, a function of inputting a cancellation instruction, or the like. The real objects 10a and 10b may be a small-size device having a function of transmitting a wireless signal containing information on the included function. The small-size device may be formed in a shape attachable to a user's finger.

The communication unit 170 performs wireless communications with the real objects 10a and/or 10b. The communication unit 170 receives a wireless signal transmitted from the real object and provides the received wireless signal to the real object sensing unit 130. For example, the communication unit 170 may include a directional antenna module (not shown) or the like.

The real object sensing unit 130 receives from the communication unit 170 a wireless signal transmitted from the real object 10a and/or 10b that exists in the hologram display area, and the real object sensing unit 130 determines a distance to the real object 10a and/or 10b using the reception intensity of the received wireless signal. Then, the real object sensing unit 130 obtains the three-dimensional position coordinate of the real object 10a and/or 10b that transmits the wireless signal in the hologram display area using the determined distance from the real object 10a and/or 10b and the reception direction of the wireless signal, and the real object sensing unit 130 generates information on the position of the real object 10a and/or 10b using the obtained three-dimensional position coordinate. The real object sensing unit 130 calculates a vector value based on a change in the position of the real object 10a and/or 10b using a change in the three-dimensional position coordinate of the real object 10a and/or 10b based on the change in the position of the real object 10, and the real object sensing unit 130 generates information on the movement pattern of the real object 10a and/or 10b using the calculated vector value.

The tactile sense providing unit 140 provides an acoustic radiation pressure to the hologram display area by radiating an acoustic wave under the control of the control unit 160. As a result, the real object 10a and/or 10b that exists in the hologram display area is influenced by the acoustic radiation pressure provided from the tactile sense providing unit 140.

The control unit 160 controls the hologram output unit 120 to project a hologram display area, and controls virtual objects to be displayed in the projected hologram display area. The control unit 160 controls virtual objects for providing various functions to be respectively displayed at their initial positions or to be respectively moved in their initial patterns using the information stored in the memory unit 110.

The contact recognizing unit 150 identifies, in real time, the positions and movement patterns of the respective real object 10a and/or 10b and virtual object in the hologram display area projected by the hologram output unit 120 using the information on the position and movement pattern of the real object 10a and/or 10b generated by the real object sensing unit 130, and the information stored in the memory unit 110. Thus, the contact recognizing unit 150 determines whether a contact between the virtual object and the real object 10a and/or 10b occurs in the hologram display area. If a part of the three-dimensional position coordinates corresponding to shapes of the respective virtual object and real object 10a and/or 10b are overlapped in the hologram display area, the contact recognizing unit 150 recognizes that the contact between the virtual object and the real object 10a and/or 10b occurs.

If the contact recognizing unit 150 recognizes that a contact between the virtual object and the real object 10a and/or 10b occurs in the hologram display area, the control unit 160 identifies the function of the real object 10a and/or 10b that comes in contact with the virtual object using the functional information of the real object 10a and/or 10b extracted by the real object sensing unit 130, and recognizes that the contact between the virtual object and the real object 10a and/or 10b is a user's input based on the identified function of the real object 10a and/or 10b. The controller 160 may determine whether the contact between the virtual object and the real object 10a and/or 10b corresponds to an input for selecting the virtual object or an input for canceling the selection, whether the contact between the virtual object and the real object 10a and/or 10b corresponds to an instruction for executing an arbitrary function or an instruction for canceling the execution of the arbitrary function, or the like.

If it is determined that the contact between the virtual object and the real object 10a and/or 10b corresponds to the input for selecting the virtual object or the input for canceling the selection, the control unit 160 may control the hologram output unit 120 to change a color or a shape of the virtual object that comes in contact with the real object 10a and/or 10b. The control unit 160 may also control the tactile sense providing unit 140 to provide an acoustic radiation pressure to the hologram display area.

If it is determined that the contact between the virtual object and the real object 10a and/or 10b is an input for selecting the virtual object, the control unit 160 traces, in real time, the movement of the real object 10a and/or 10b in the hologram display area using the information on the movement pattern of the real object 10a and/or 10b generated by the real object sensing unit 130. Then, the control unit 160 controls the hologram output unit 120 to allow the virtual object that comes in contact with the real object 10a and/or 10bto be moved corresponding to the movement of the real object 10a and/or 10b.

If it is recognized that an instruction for executing an arbitrary function is inputted by a user or that an instruction for canceling the arbitrary function is inputted by the user, the control unit 160 controls the hologram output unit 120 to change the color or the shape of the hologram display area or the virtual object displayed in the hologram display area. The control unit 160 may control the tactile sense providing unit 140 to provide an acoustic radiation pressure to the hologram display area.

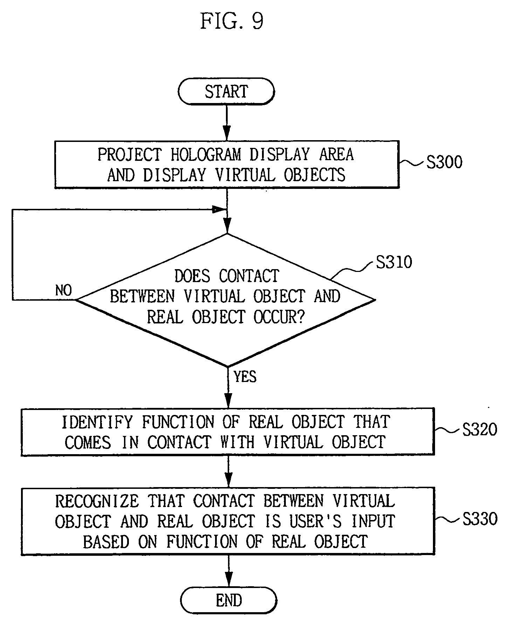

A method for recognizing an input in the user interface using the hologram according to an exemplary embodiment will hereinafter be described with reference to FIG. 9 and FIG. 10. FIG. 9 is a flowchart illustrating a method for recognizing an input in the user interface using the hologram according to an exemplary embodiment.

First, the user interface 200 using the hologram projects a hologram display area in a space, and displays virtual objects in the projected hologram display area (S300).

If it is determined that a contact between a real object 10a and/or 10band one of the virtual objects displayed in operation S300 occurs (S310), the control unit 160 identifies a function of the real object 10a and/or 10b that comes in contact with the virtual object (S320), and recognizes that the contact between the virtual object and the real object 10a and/or 10b is a user's input based on the identified function of the real object 10a and/or 10b (S330).

At the operation S330, the control unit 160 may determine whether the contact between the virtual object and the real object 10a and/or 10b corresponds to an input for selecting the virtual object or an input for canceling the selection, or the control unit 160 may determine that an instruction for executing a specified function is inputted by a user or that an instruction for canceling the execution of the specified function is inputted by the user.

If it is determined in operation S330 that the contact between the virtual object and the real object 10a and/or 10b corresponds to the input for selecting the virtual object, the control unit 160 traces, in real time, the movement of the real object 10a and/or 10b, and controls the hologram output unit 120 to allow the virtual object that comes in contact with the real object 10a and/or 10b to be moved corresponding to the movement of the real object 10a and/or 10b.

If it is determined at the operation S330 that the contact between the virtual object and the real object 10a and/or 10b corresponds to the input for selecting the virtual object or the input for canceling the selection, the control unit 160 controls the hologram output unit 120 to change the color or the shape of the virtual object that comes in contact with the real object 10a and/or 10b. For example, at the operation S330, if a real object 10a having a function of inputting a selection comes in contact with a virtual object as illustrated in FIG. 10, the control unit 160 determines that the contact between the virtual object and the real object 10a corresponds to an input for selecting the virtual object. If a real object 10b having a function of inputting the cancellation of the selection comes in contact with a virtual object, the control unit 160 determines that the contact between the virtual object and the real object 10b corresponds to an input form canceling the selection of the virtual object. If it is recognized at the operation S330 that an instruction for executing a specified function is inputted by a user or that an instruction for canceling the execution of the specified function is inputted by the user, the control unit 160 controls the hologram output unit 120 to change the color or the shape of the hologram display area or the virtual object that comes in contact with the real object 10a and/or 10b. Then, the control unit 160 controls the tactile sense providing unit 140 to provide an acoustic radiation pressure to the hologram display area.

For example, at the operation S330, if a real object 10a having a function of inputting an execution instruction comes in contact with a virtual object as illustrated in FIG. 10, the control unit 160 recognizes that the instruction for executing the specified function is inputted due to the contact between the virtual object and the real object 10a having the function of inputting the execution instruction. If a real object 10b having a function of inputting an instruction for canceling the execution comes in contact with a virtual object, the control unit 160 recognizes that an instruction for canceling the execution of a specified function is inputted due to the contact between the virtual object and the real object 10b having the function of inputting the instruction for canceling the execution. As multiple real objects 10a and/or 10b may have different respective functions, a user may place real objects 10a and/or 10b having the different functions on different fingers to manipulate the user interface using the hologram.

The user interface using the hologram, disclosed herein, is not limited to the aforementioned embodiments but may be variously modified within the scope allowed by the technical spirit disclosed herein.

According to a user interface using a hologram disclosed herein, virtual objects for user input are displayed in a space using a hologram, and a user's input is recognized through the displayed virtual objects.

Also, according to a user interface using a hologram disclosed herein, as a user's input is recognized, the recognition of the user's input is fed back to a user through a visual or tactile effect.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A user interface using a hologram includes a memory unit to store information on a shape, a function, a position, and a movement pattern for a virtual object; a hologram output unit to project a hologram display area and to display the virtual object in the projected hologram display area; a real object sensing unit to sense a real object in the hologram display area and to generate information on a position and a movement pattern of the real object; a contact recognizing unit to determine the positions and the movement patterns of the respective virtual object and the real object to recognize a contact between the virtual object and the real object; and a control unit to determine whether the recognized contact between the virtual object and the real object corresponds to an input for selecting the virtual object.

## Claims

1. A user interface (100), comprising:
a memory unit (110) to store information on a shape, a function, a position, and a movement pattern for a virtual object;
a hologram output unit (120) to project a hologram display area and to display the virtual object in the projected hologram display area;
a real object sensing unit (130) to sense a real object (10) in the hologram display area and to generate information on a position and a movement pattern of the real object (10),
a contact recognizing unit (150) to determine the positions and the movement patterns of the respective virtual object and the real object (10) in the hologram display area according to the information on the position and the movement pattern of the real object (10) generated by the real object sensing unit (130), and the information stored in the memory unit (110) to recognize a contact between the virtual object and the real object (10), and
a control unit (160) to determine whether the recognized contact between the virtual object and the real object (10) corresponds to an input for selecting the virtual object,
wherein, if a plurality of the real objects (10) simultaneously come in contact with a plurality of markers of the virtual object that exist at part of the virtual object, the control unit (160) determines that the contact between the virtual object and the plurality of the real objects (10) corresponds to the input for selecting the virtual object for dragging the virtual object to another virtual object or for rotating the virtual object, and
wherein, if the contact of one of the plurality of the real objects (10) is released from one of the plurality of markers with which the plurality of the real objects (10) comes in contact, the control unit (160) determines that the input for selecting the virtual object is cancelled.

2. The user interface of claim 1,
wherein the control unit searches for the information stored in the memory unit to determine a function of the virtual object that comes in contact with the real object and determines that an instruction for executing the determined function is inputted if it is determined that the contact between the virtual object and the real object corresponds to the input for selecting the virtual object.

3. The user interface of claim 1 or 2,
wherein, if it is determined that the contact between the virtual object and the real object corresponds to the input for selecting the virtual object, the control unit controls the hologram output unit to change a color or a shape of the virtual object that comes in contact with the real object.

4. The user interface of any of claims 1 to 3,
wherein, if the control unit determines that the contact between the virtual object and the real object corresponds an input for canceling the selection, the control unit controls the hologram output unit to change a color or a shape of the virtual object that comes in contact with the real object.

5. The user interface of any of claims 1 to 4,
wherein, if the control unit determines that the contact between the virtual object and the real object corresponds to the input for selecting the virtual object, the control unit traces the movement of the real object in the hologram display area according to the information on the movement pattern of the real object generated by the real object sensing unit, and controls the hologram output unit to move the virtual object that comes in contact with the real object corresponding to the movement of the real object.

6. The user interface of any of claims 1 to 5,
wherein, if the real object comes in contact with the virtual object for longer than a reference time, the control unit determines that the contact between the virtual object and the real object corresponds to the input for selecting the virtual object.

7. The user interface of any of claims 1 to 6,
wherein, if the control unit determines that the contact between the virtual object and the real object corresponds to the input for selecting the virtual object, the control unit traces the movement of the real object in the hologram display area according to the information on the movement pattern of the real object generated by the real object sensing unit, and if the real object that comes in contact with the virtual object is out of a range sensed by the real object sensing unit, the control unit determines that the input for selecting the virtual object is cancelled.

8. The user interface of any of claims 1 to 7,
wherein the control unit controls the hologram output unit to rotate the virtual object in response to a rotational movement of the real object that comes in contact with the virtual object or to drag the virtual object in response to the movement position of the real object based on the movement of the real object that comes in contact with the virtual object, and determines that an instruction for executing a specified function is inputted or that an instruction for canceling the execution of the specified function is inputted.

9. The user interface of any of claims 1 to 8,
wherein, if the virtual object is rotated at an angle in a direction, if the virtual object is dragged to a position at which a virtual object for providing an executing function or a canceling function is displayed, if the virtual object for providing the executing function or the canceling function is dragged to a position at which a virtual object to be executed or cancelled is displayed, or if the movement pattern of the real object corresponds to a specified movement pattern, the control unit recognizes that the instruction for executing a specified function is inputted or that the instruction for canceling the execution of the specified function is inputted, and
wherein, optionally, if it is determined that the instruction for executing the specified function is inputted or the instruction for canceling the execution of the specified function is inputted, the control unit controls the hologram output unit to change a color or a shape of the hologram display area or the virtual object displayed in the hologram display area.

10. The user interface of any of claims 1 to 9,
further comprising a tactile sense providing unit to radiate an acoustic wave to provide an acoustic radiation pressure to the hologram display area.

11. The user interface of any of claims 1 to 10,
wherein the real object sensing unit determines a three-dimensional position coordinate of the real object in the hologram display area, generates information on the position of the real object using the determined three-dimensional position coordinate, calculates a vector value according to a change in the position of the real object according to a change in the three-dimensional position coordinate of the real object, and generates information on the movement pattern of the real object according to the calculated vector value, and
wherein, optionally, the real object sensing unit determines the three-dimensional coordinate of the real object in the hologram display area according to one of a capacitive touch screen method, an infrared (IR) touch screen method, an electromagnetic resonance (EMR) digitizer method, or an image recognizing method.

12. The user interface of claim 11,
wherein the real object transmits a wireless signal, and
wherein, optionally, the real object sensing unit comprises a communication unit to communicate with the real object, and the real object sensing unit receives the wireless signal transmitted from the real object through the communication unit, determines a distance to the real object according a reception intensity of the received wireless signal, and determines the three-dimensional coordinate of the real object according to the determined distance from the real object and a reception direction of the received wireless signal.

13. A method for a user interface (100), the method comprising:
displaying a virtual object in a hologram display area;
if a contact between a real object (10) and the virtual object occurs, determining if the contact between the real object (10) and the virtual object corresponds to an input for selecting the virtual object;
moving the selected virtual object according to a movement of the real object (10), and
executing a function corresponding to the selected virtual object according to the movement of the selected virtual object,
wherein, if a plurality of the real objects (10) simultaneously come in contact with a plurality of markers of the virtual object that exist at part of the virtual object, a control unit (160) determines that the contact between the virtual object and the plurality of the real objects (10) corresponds to the input for selecting the virtual object for dragging the virtual object to another virtual object or fro rotating the virtual object, and
wherein, if the contact of one of the plurality of the real objects (10) is released from one of the plurality of markers with which the plurality of the real objects (10) comes in contact, the control unit (160) determines that the input for selecting the virtual object is cancelled.

## Patentansprüche

1. Benutzerschnittstelle (100), umfassend:
eine Speichereinheit (110) zum Speichern von Information zu einer Form, einer Funktion, einer Position und einem Bewegungsmuster für ein virtuelles Objekt;
eine Hologrammausgabeeinheit (120) zum Projizieren eines Hologrammanzeigebereichs und zum Anzeigen des virtuellen Objekts in dem projizierten Hologrammanzeigebereich;
eine Reales-Objekt-Sensoreinheit (130) zum Sensieren eines realen Objekts (10) in dem Hologrammanzeigebereich und zum Erzeugen von Information zu einer Position und einem Bewegungsmuster des realen Objekts (10);
eine Kontakterkennungseinheit (150) zum Bestimmen der Positionen und der Bewegungsmuster des jeweiligen virtuellen Objekts und des realen Objekts (10) in dem Hologrammanzeigebereich gemäß der von der Reales-Objekt-Sensoreinheit (130) erzeugten Information zu der Position und dem Bewegungsmuster des realen Objekts (10) und der in der Speichereinheit (110) gespeicherten Information zum Erkennen eines Kontakts zwischen dem virtuellen Objekt und dem realen Objekt (10); und
eine Steuereinheit (160) zum Bestimmen, ob der erkannte Kontakt zwischen dem virtuellen Objekt und dem realen Objekt (10) einer Eingabe zum Wählen des virtuellen Objekts entspricht, worin, wenn eine Mehrzahl der realen Objekte (10) gleichzeitig in Kontakt mit einer Mehrzahl von Markern des virtuellen Objekts, die an einem Teil des virtuellen Objekts existieren, kommt, die Steuereinheit (160) bestimmt, dass der Kontakt zwischen dem virtuellen Objekt und der Mehrzahl der realen Objekte (10) der Eingabe zum Wählen des virtuellen Objekts entspricht, um das virtuelle Objekt zu einem anderen virtuellen Objekt zu ziehen oder um das virtuelle Objekt zu drehen, und
worin, wenn der Kontakt eines der Mehrzahl von realen Objekten (10) von einem der Mehrzahl von Markern, mit denen die Mehrzahl der realen Objekte (10) in Kontakt kommt, gelöst wird, die Steuereinheit (160) bestimmt, dass die Eingabe zum Wählen des virtuellen Objekts gelöscht wird.

2. Die Benutzerschnittstelle von Anspruch 1, worin die Steuereinheit nach in der Speichereinheit gespeicherter Information sucht, um eine Funktion des virtuellen Objekts zu bestimmen, das mit dem realen Objekt in Kontakt kommt, und bestimmt, dass die Anweisung zum Ausführen der bestimmten Funktion eingegeben wird, wenn bestimmt wird, dass der Kontakt zwischen dem virtuellen Objekt und dem realen Objekt der Eingabe zum Wählen des virtuellen Objekts entspricht.

3. Die Benutzerschnittstelle von Anspruch 1 oder 2, worin, wenn bestimmt wird, dass der Kontakt zwischen dem virtuellen Objekt und dem realen Objekt der Eingabe zum Wählen des virtuellen Objekts entspricht, die Steuereinheit die Hologrammausgabeeinheit ansteuert, um eine Farbe oder eine Form des virtuellen Objekts zu verändern, das mit dem realen Objekt in Kontakt kommt.

4. Die Benutzerschnittstelle von einem der Ansprüche 1 bis 3, worin, wenn die Steuereinheit bestimmt, dass der Kontakt zwischen dem virtuellen Objekt und dem realen Objekt einer Eingabe zum Löschen der Wahl entspricht, die Steuereinheit die Hologrammausgabeeinheit ansteuert, um eine Farbe oder eine Form des virtuellen Objekts zu ändern, das mit dem realen Objekt in Kontakt kommt.

5. Die Benutzerschnittstelle von einem der Ansprüche 1 bis 4, worin, wenn die Steuereinheit bestimmt, dass der Kontakt zwischen dem virtuellen Objekt und dem realen Objekt der Eingabe zum Wählen des virtuellen Objekts entspricht, die Steuereinheit die Bewegung des realen Objekts in dem Hologrammanzeigebereich gemäß der von dem Reales-Objekt-Sensoreinheit erzeugten Information zum Bewegungsmuster des realen Objekts verfolgt und die Hologrammausgabeeinheit ansteuert, um das virtuelle Objekt, das mit dem realen Objekt in Kontakt kommt, entsprechend der Bewegung des realen Objekts zu bewegen.

6. Die Benutzerschnittstelle von einem der Ansprüche 1 bis 5, worin, wenn das reale Objekt mit dem virtuellen Objekt für länger als eine Referenzzeit in Kontakt kommt, die Steuereinheit bestimmt, dass der Kontakt zwischen dem virtuellen Objekt und dem realen Objekt der Eingabe zum Wählen des virtuellen Objekts entspricht.

7. Die Benutzerschnittstelle von einem der Ansprüche 1 bis 6, worin, wenn die Steuereinheit bestimmt, dass der Kontakt zwischen dem virtuellen Objekt und dem realen Objekt der Eingabe zum Wählen des virtuellen Objekts entspricht, die Steuereinheit die Bewegung des realen Objekts in dem Hologrammanzeigebereich gemäß der von der Reales-Objekt-Sensoreinheit erzeugten Information zum Bewegungsmuster des realen Objekts verfolgt, und wenn das reale Objekt, das mit dem virtuellen Objekt in Kontakt kommt, außerhalb einer von der Reales-Objekt-Sensoreinheit sensierten Reichweite ist, die Steuereinheit bestimmt, dass die Steuereingabe zum Wählen des virtuellen Objekts gelöscht wird.

8. Die Benutzerschnittstelle von einem der Ansprüche 1 bis 7, worin die Steuereinheit die Hologrammausgabeeinheit ansteuert, um, in Antwort auf eine Drehbewegung des realen Objekts, das mit dem virtuellen Objekt in Kontakt kommt, das virtuelle Objekt zu drehen, oder in Antwort auf die Bewegungsposition des realen Objekts basierend auf der Bewegung des realen Objekts, das mit dem virtuellen Objekt in Kontakt kommt, das virtuelle Objekt zu ziehen, und bestimmt, dass eine Anweisung zum Ausführung einer spezifizierten Funktion eingegeben wird oder dass eine Anweisung zum Löschen der Ausführung der spezifizierten Funktion eingegeben wird.

9. Die Benutzerschnittstelle von einem der Ansprüche 1 bis 8, worin, wenn das virtuelle Objekt mit einem Winkel in eine Richtung gedreht wird, wenn das virtuelle Objekt zu einer Position gezogen wird, in der ein virtuelles Objekt zum Bereitstellen einer Ausführungsfunktion oder einer Löschfunktion angezeigt wird, wenn das virtuelle Objekt zum Bereitstellen der Ausführungsfunktion oder der Löschfunktion zu einer Position gezogen wird, in der ein auszuführendes oder zu löschendes virtuelles Objekt angezeigt wird, oder wenn das Bewegungsmuster des realen Objekts einem spezifizierten Bewegungsmuster entspricht, die Steuereinheit erkennt, dass die Anweisung zum Ausführen einer spezifizierten Funktion eingegeben wird oder dass die Anweisung zum Löschen der Ausführung der spezifizierten Funktion eingegeben wird, und
worin optional, wenn bestimmt wird, dass die Anweisung zum Ausführen der spezifizierten Funktion eingegeben wird oder die Anweisung zum Löschen der Ausführung der spezifizierten Funktion eingegeben wird, die Steuereinheit die Hologrammausgabeeinheit ansteuert, um eine Farbe oder Form des Hologrammanzeigebereichs oder des in dem Hologrammanzeigebereich angezeigten virtuellen Objekts zu ändern.

10. Die Benutzerschnittstelle von einem der Ansprüche 1 bis 9, die ferner eine Taktilsensier-Bereitstellungseinheit aufweist, um eine akustische Welle abzustrahlen, um an dem Hologrammanzeigebereich einen akustischen Strahlungsdruck bereitzustellen.

11. Die Benutzerschnittstelle von einem der Ansprüche 1 bis 10, worin die Reales-Objekt-Sensoreinheit eine dreidimensionale Positionskoordinate des realen Objekts in dem Hologrammanzeigebereich bestimmt, Information zur Position des realen Objekts unter Verwendung der bestimmten dreidimensionalen Positionskoordinate erzeugt, einen Vektorwert gemäß einer Änderung in der Position des realen Objekts gemäß einer Änderung in der dreidimensionalen Positionskoordinate des realen Objekts berechnet, und Information zum Bewegungsmuster des realen Objekts gemäß dem berechneten Vektorwert erzeugt, und worin optional die Reales-Objekt-Sensoreinheit die dreidimensionale Koordinate des realen Objekts in dem Hologrammanzeigebereich gemäß einem eines kapazitiven Berührungsbildschirmverfahrens, eines Infrarot-(IR-)-Berührungsbildschirmverfahrens, eines Elektromagnetische-Resonanz-(EMR)-Digitalisierungsverfahrens oder eines Bilderkennungsverfahrens bestimmt.

12. Die Benutzerschnittstelle von Anspruch 11, worin das reale Objekt ein drahtloses Signal sendet, und
worin optional die Reales-Objekt-Sensoreinheit eine Kommunikationseinheit aufweist, um mit dem realen Objekt zu kommunizieren, und die Reales-Objekt-Sensoreinheit das von dem realen Objekt gesendete drahtlose Signal durch die Kommunikationseinheit empfängt, einen Abstand zu dem realen Objekt gemäß der Empfangsintensität des empfangenen drahtlosen Signals bestimmt, und die dreidimensionale Koordinate des realen Objekts gemäß dem festgestellten Abstand von dem realen Objekt und einer Empfangsrichtung des empfangenen drahtlosen Signals bestimmt.

13. Verfahren für eine Benutzerschnittstelle (100), wobei das Verfahren umfasst:
Anzeigen eines virtuellen Objekts in einem Hologrammanzeigebereich; wenn ein Kontakt zwischen einem realen Objekt (10) und dem virtuellen Objekt auftritt, Bestimmen, ob der Kontakt zwischen dem realen Objekt (10) und dem virtuellen Objekt einer Eingabe zum Wählen des virtuellen Objekts entspricht;
Bewegen des gewählten virtuellen Objekts gemäß einer Bewegung des realen Objekts (10); und
Ausführen einer Funktion entsprechend dem gewählten virtuellen Objekt gemäß der Bewegung des gewählten virtuellen Objekts, worin, wenn eine Mehrzahl von realen Objekten (10) gleichzeitig mit einer Mehrzahl von Markern des virtuellen Objekts in Kontakt kommt, die an einem Teil des virtuellen Objekts existieren, eine Steuereinheit (160) bestimmt, dass der Kontakt zwischen dem virtuellen Objekt und der Mehrzahl der realen Objekte (10) der Eingabe zum Wählen des virtuellen Objekts entspricht, um das virtuelle Objekt zu einem anderen virtuellen Objekt zu ziehen oder um das virtuelle Objekt zu drehen, und worin, wenn der Kontakt eines der Mehrzahl der realen Objekte (10) von einem der Mehrzahl von Markern, mit denen die Mehrzahl der realen Objekte (10) in Kontakt kommt, gelöst wird, die Steuereinheit (160) bestimmt, dass die Eingabe zum Wählen des virtuellen Objekts gelöscht wird.

## Revendications

1. Interface utilisateur (100), comprenant
une unité de mémoire (110) pour stocker des informations sur une forme, une fonction, une position et un schéma de mouvement pour un objet virtuel;
une unité de production d'hologrammes (120) pour projeter une surface d'affichage d'hologrammes et pour afficher l'objet virtuel dans la surface d'affichage d'hologrammes projetée;
une unité de détection d'objet réel (130) pour détecter un objet réel (10) dans la surface d'affichage d'hologrammes et pour générer des informations sur une position et un schéma de mouvement de l'objet réel (10) ;
une unité de reconnaissance de contact (150) pour déterminer les positions et les schémas de mouvement de l'objet virtuel respectif et de l'objet réel (10) dans la surface d'affichage d'hologrammes selon les informations sur la position et le schéma de mouvement de l'objet réel (10) générées par l'unité de détection d'objet réel (130) et les informations stockées dans l'unité de mémoire (110) pour reconnaître un contact entre l'objet virtuel et l'objet réel (10); et
une unité de commande (160) pour déterminer si le contact reconnu entre l'objet virtuel et l'objet réel (10) correspond à une entrée pour sélectionner l'objet virtuel,
dans laquelle, si une pluralité des objets réels (10) viennent simultanément en contact avec une pluralité de marqueurs de l'objet virtuel qui existent à une partie de l'objet virtuel, l'unité de commande (160) détermine que le contact entre l'objet virtuel et la pluralité des objets réels (10) correspond à l'entrée pour sélectionner l'objet virtuel pour déplacer l'objet virtuel jusqu'à un autre objet virtuel ou pour faire tourner l'objet virtuel, et
dans laquelle, si le contact d'un de la pluralité des objets réels (10) est libéré d'un de la pluralité de marqueurs avec lesquels la pluralité des objets réels (10) vient en contact, l'unité de commande (160) détermine que l'entrée pour sélectionner l'objet virtuel est supprimée.

2. Interface utilisateur selon la revendication 1,
dans laquelle l'unité de commande recherche les informations stockées dans l'unité de mémoire pour déterminer une fonction de l'objet virtuel qui vient en contact avec l'objet réel et détermine qu'une instruction pour exécuter la fonction déterminée est entrée s'il est déterminé que le contact entre l'objet virtuel et l'objet réel correspond à l'entrée pour sélectionner l'objet virtuel.

3. Interface utilisateur selon la revendication 1 ou 2,
dans laquelle, s'il est déterminé que le contact entre l'objet virtuel et l'objet réel correspond à l'entrée pour sélectionner l'objet virtuel, l'unité de commande adresse à l'unité de production d'hologrammes l'ordre de changer une couleur ou une forme de l'objet virtuel qui vient en contact avec l'objet réel.

4. Interface utilisateur selon l'une quelconque des revendications 1 à 3,
dans laquelle, si l'unité de commande détermine que le contact entre l'objet virtuel et l'objet réel correspond à une entrée pour supprimer la sélection, l'unité de commande adresse à l'unité de production d'hologrammes l'ordre de changer une couleur ou une forme de l'objet virtuel qui vient en contact avec l'objet réel.

5. Interface utilisateur selon l'une quelconque des revendications 1 à 4,
dans laquelle, si l'unité de commande détermine que le contact entre l'objet virtuel et l'objet réel correspond à l'entrée pour sélectionner l'objet virtuel, l'unité de commande suit le mouvement de l'objet réel dans la surface d'affichage d'hologrammes selon les informations sur le schéma de mouvement de l'objet réel générées par l'unité de détection d'objet réel, et adresse à l'unité de production d'hologrammes l'ordre de mouvoir l'objet virtuel qui vient en contact avec l'objet réel en correspondance avec le mouvement de l'objet réel.

6. Interface utilisateur selon l'une quelconque des revendications 1 à 5,
dans laquelle, si l'objet réel vient en contact avec l'objet virtuel pendant un temps plus long qu'un temps de référence, l'unité de commande détermine que le contact entre l'objet virtuel et l'objet réel correspond à l'entrée pour sélectionner l'objet virtuel.

7. Interface utilisateur selon l'une quelconque des revendications 1 à 6,
dans laquelle, si l'unité de commande détermine que le contact entre l'objet virtuel et l'objet réel correspond à l'entrée pour sélectionner l'objet virtuel, l'unité de commande suit le mouvement de l'objet réel dans la surface d'affichage d'hologrammes selon les informations sur le schéma de mouvement de l'objet réel générées par l'unité de détection d'objet réel, et si l'objet réel qui vient en contact avec l'objet virtuel est hors d'une portée détectée par l'unité de détection d'objet réel, l'unité de commande détermine que l'entrée pour sélectionner l'objet virtuel est supprimée.

8. Interface utilisateur selon l'une quelconque des revendications 1 à 7,
dans laquelle l'unité de commande adresse à l'unité de production d'hologrammes l'ordre de faire tourner l'objet virtuel en réponse à un mouvement de rotation de l'objet réel qui vient en contact avec l'objet virtuel ou de déplacer l'objet virtuel en réponse à la position de mouvement de l'objet réel sur la base du mouvement de l'objet réel qui vient en contact avec l'objet virtuel, et détermine qu'une instruction d'exécuter une fonction spécifiée est entrée ou qu'une instruction de supprimer l'exécution de la fonction spécifiée est entrée.

9. Interface utilisateur selon l'une quelconque des revendications 1 à 8,
dans laquelle, si l'objet virtuel est tourné à un angle dans une direction, si l'objet virtuel est déplacé à une position à laquelle un objet virtuel pour procurer une fonction d'exécution ou une fonction de suppression est affiché, si l'objet virtuel pour procurer la fonction d'exécution ou la fonction de suppression est déplacé à une position à laquelle un objet virtuel à exécuter ou à supprimer est affiché, ou si le schéma de mouvement de l'objet réel correspond à un schéma de mouvement spécifié, l'unité de commande reconnaît que l'instruction d'exécuter une fonction spécifiée est entrée ou que l'instruction de supprimer l'exécution de la fonction spécifiée est entrée, et
dans laquelle, en option, s'il est déterminé que l'instruction d'exécuter la fonction spécifiée est entrée ou que l'instruction de supprimer l'exécution de la fonction spécifiée est entrée, l'unité de commande adresse à l'unité de production d'hologrammes l'ordre de changer une couleur ou une forme de la surface d'affichage d'hologrammes ou de l'objet virtuel affiché dans la surface d'affichage d'hologrammes.

10. Interface utilisateur selon l'une quelconque des revendications 1 à 9,
comprenant en outre une unité de fourniture de détection tactile pour émettre une onde acoustique afin de procurer une pression de rayonnement acoustique à la surface d'affichage d'hologrammes.

11. Interface utilisateur selon l'une quelconque des revendications 1 à 10,
dans laquelle l'unité de détection d'objet réel détermine une coordonnée de position tridimensionnelle de l'objet réel dans la surface d'affichage d'hologrammes, génère des informations sur la position de l'objet réel en utilisant la coordonnée de position tridimensionnelle déterminée, calcule une valeur de vecteur selon un changement dans la position de l'objet réel selon un changement dans la coordonnée de position tridimensionnelle de l'objet réel, et génère des informations sur le schéma de mouvement de l'objet réel selon la valeur de vecteur calculée, et
dans laquelle, en option, l'unité de détection d'objet réel détermine la coordonnée tridimensionnelle de l'objet réel dans la surface d'affichage d'hologrammes selon un procédé parmi un procédé à écran tactile capacitif, un procédé à écran tactile infrarouge (IR), un procédé à numériseur à résonance électromagnétique (EMR), ou un procédé de reconnaissance d'image.

12. Interface utilisateur selon la revendication 11,
dans laquelle l'objet réel transmet un signal sans fil, et
dans laquelle, en option, l'unité de détection d'objet réel comprend une unité de communication pour communiquer avec l'objet réel, et l'unité de détection d'objet réel reçoit le signal sans fil transmis de l'objet réel via l'unité de communication, détermine une distance jusqu'à l'objet réel selon une intensité de réception du signal sans fil reçu, et détermine la coordonnée tridimensionnelle de l'objet réel selon la distance déterminée à partir de l'objet réel et d'une direction de réception du signal sans fil reçu.

13. Procédé pour une interface utilisateur (100), le procédé comprenant les étapes suivantes:
afficher un objet virtuel dans une surface d'affichage d'hologrammes;
s'il se produit un contact entre un objet réel (10) et l'objet virtuel, déterminer si le contact entre l'objet réel (10) et l'objet virtuel correspond à une entrée pour sélectionner l'objet virtuel;
mouvoir l'objet virtuel sélectionné selon un mouvement de l'objet réel (10); et
exécuter une fonction correspondant à l'objet virtuel sélectionné selon le mouvement de l'objet virtuel sélectionné:
dans lequel, si une pluralité des objets réels (10) viennent simultanément en contact avec une pluralité de marqueurs de l'objet virtuel qui existent à une partie de l'objet virtuel, une unité de commande (160) détermine que le contact entre l'objet virtuel et la pluralité des objets réels (10) correspond à l'entrée pour sélectionner l'objet virtuel pour déplacer l'objet virtuel jusqu'à un autre objet virtuel ou pour faire tourner l'objet virtuel; et
dans lequel, si le contact d'un de la pluralité des objets réels (10) est libéré d'un de la pluralité de marqueurs avec lesquels la pluralité des objets réels (10) viennent en contact, l'unité de commande (160) détermine que l'entrée pour sélectionner l'objet virtuel est supprimée.
